# EUROPEAN PATENT APPLICATION

(11) **EP 4 841 085 A1**
(43) Date of publication of application: **18.11.2026**
(21) Application number: 25176431.2
(22) Date of filing: 14.05.2025
(51) Int. Cl.: F02C 7/228, F02C 9/40, F23R 3/34

(54) **EMISSION COMPLIANT GAS TURBINE POWER PLANT USING AMMONIA AS FUEL AND METHOD FOR CONTROLLING A GAS TURBINE POWER PLANT**

(71) Applicant: Ansaldo Energia Switzerland AG, 5400 Baden (CH)
(72) Inventor: CIANI, Andrea, 5400 BADEN (CH); DUESING, Michael Klaus, 5400 BADEN (CH); TAY WO CHONG HILARES, Luis, 5400 BADEN (CH)
(74) Representative: Studio Torta S.p.A.

(57) **Abstract**

A gas turbine power plant includes a gas turbine engine (2), having a combustor assembly (7) with a plurality of combustion units (10); and a fuel supply line (3) and fuel actuators (13a, 13b) configured to supply a fuel (F) containing ammonia to the combustion units (10) of the combustor assembly (7). A control system (5) is configured to selectively switch off a number (M_{I}) of combustion units (10') at partial load conditions and to control the fuel actuators (13a, 13b) so that the remaining active combustion units (10) process an air/fuel mixture having a fuel-air equivalence ratio (ϕ) within an admissible rich range (R).

## Description

### TECHNICAL FIELD

The present invention relates to an emission compliant gas turbine power plant using ammonia as fuel and to a method for controlling a gas turbine power plant.

### BACKGROUND

As is well known, ammonia (NH₃) is a promising fuel that may be used to supply gas turbine engines and make a strong contribution to decarbonisation. The combustion of ammonia is in fact completely carbon-free, on the one hand, and, on the other, ammonia is a high energy density fuel, suitable for the efficient and long-term storage of large amounts of chemical energy. The volume required for storage may be considerably reduced, e.g. compared to hydrogen, because ammonia is rather easy to liquefy and may be kept in a liquid state at a relatively low pressure even at room temperature. Thus, not only storage, but also transport and distribution may be made efficient, safe and cost-effective.

However, it is known that the combustion of ammonia under normal operating conditions of gas turbine engines, particularly in lean pre-mix mode, produces large quantities of nitrogen oxides (NOₓ). NOₓ emissions are critical and should be minimized, as well as carbon emissions. In addition, mixtures of ammonia and carbon-based fuels, such as natural gas or methane, may not meet stringent requirements currently set for NOₓ emission, when directly fed to gas turbine engines. The advantage of carbon-free or at least low-carbon combustion may thus be reduced or even cancelled by a corresponding increase in NOₓ emissions.

On the other hand, there is evidence that the use of ammonia in two-stage combustion systems may reduce NOₓ emissions, if the first stage operates with a rich mixture with a fuel-air equivalence ratio greater than 1 followed by dilution air injection to consume the hydrogen produced by pyrolization of unburnt ammonia. However, applying such technology would require new combustion systems.

Furthermore, the reactivity of ammonia is relatively low and is another obstacle that makes it difficult to use in gas turbine engines, either as a fuel alone or mixed with other components.

Operating gas turbine engines at partial load on ammonia alone or ammonia rich fuels may be particularly critical. The total airflow available for combustion is in fact in part supplied to first stage burners for rich combustion and in part injected as dilution air downstream of the first stage burners. For a given air split between first stage and dilution air, however, fuel flow reduction associated with partial load operation may lead to lean combustion in the first stage. Lean combustion would in turn result in an increase in NOₓ emissions and in failing to comply with emission requirements. For example, this may be the case of an annular combustor with burners sustained by a pilot flame at partial load.

### SUMMARY OF THE INVENTION

It is thus an object of the present invention to provide a gas turbine power plant and a method for controlling a gas turbine power plant that allow to overcome or at least attenuate the above described limitations.

According to the present invention, there is provided a gas turbine power plant comprising:
a gas turbine engine, including a combustor assembly with a plurality of combustion units;
a fuel supply line and fuel actuators configured to supply a fuel containing ammonia to the combustion units of the combustor assembly;
a control system configured to selectively switch off a number of combustion units at partial load conditions and to control the fuel actuators so that the remaining active combustion units process an air/fuel mixture having a fuel-air equivalence ratio within an admissible rich range.

According to the invention, some of the combustion units are switched off and set in an inactive condition at partial load, so that no fuel is fed through the inactive combustion units, that do not support reaction taking place in the combustor assembly. More precisely, fuel supply to inactive combustion units is completely cut off, while air supply is maintained and air continues to flow also through the inactive combustion units. A larger amount of fuel is thus available for the active combustion units, which are forced to run on a rich mixture, with a fuel-air equivalence ratio greater than one. In turn, the rich fuel-air equivalence ratio results in an environment which is poor in oxygen and favors the remaining unburned ammonia to decompose into molecular hydrogen (H₂) and nitrogen (N₂) in the absence of oxidizing agents. The formation of pollutants, especially NOₓ, may thus be prevented or at least kept at acceptable levels, so as to comply with emission regulations. At the same time, flame stability may be achieved together with reduction in NOₓ emissions even at low partial load, by switching off an appropriate number of combustion units depending on the load set-point.

In other words, the invention allows to control fuel supply and maintain rich fuel-air equivalence ratio as well as flame stability independently of load requirements. Thus, conditions may be created to obtain efficient, safe and emission-compliant operation and exploit advantages of ammonia as fuel at varying load.

According to an aspect of the invention, the control system is further configured to:
define or receive a load set-point;
define a target fuel flow rate such that the load set-point is met with the target fuel flow rate; and
select the number of combustion units so that the target fuel flow rate distributed to the remaining active combustion units causes the fuel-air equivalence ratio of the air/fuel mixtures processed by all the active combustion units to lie within the admissible rich range.

The activation/deactivation strategy thus defined ensures twofold advantages. On the one hand, the overall load requirements are constantly met and there is no appreciable risk of missing control targets. On the other hand, the desired rich fuel-air equivalence ratio may be easily maintained and emission levels, in particular as far as NOₓ emissions are concerned, may be kept low.

According to an aspect of the invention, the control system is further configured to control the fuel actuators so that all the active combustion units receive equal individual target fuel flow rates.

Providing equal target fuel flow rates to all the active combustion units avoids critical conditions in which supply differences may cause some of the active combustion units to be nevertheless operated with fuel-air equivalence ratio near or even below the lower limit of the admissible rich range. Also flame stability is equally preserved for all the active combustion units.

According to an aspect of the invention, the control system is further configured to cut off fuel supply to the inactive combustion units and the inactive combustion units are fed with air only and no reaction takes place thereat.

Complete cut-off of fuel supply to the inactive combustion units helps control reactions in the combustor assembly. In particular, cut-off prevents reactions with a lean fuel-air equivalence ratio, which may affect the overall production of NOx.

According to an aspect of the invention, the inactive combustion units are either uniformly distributed over the combustor assembly or located close to each other in groups of adjacent combustion units.

Depending on circumstances and/or design preferences, the pattern of inactive combustion units may be flexibly selected to obtain uniform temperature distribution at the turbine inlet or to minimize the effects of interfaces between active and inactive combustion units, in order to better preserve rich fuel-air equivalence ratio in any portion of the combustor assembly.

According to an aspect of the invention, the gas turbine engine comprises an upper casing and a lower casing joined at a split plane, wherein the combustor assembly comprises an annular combustion chamber common to all the combustion units and wherein the inactive combustion units are preferably arranged in groups around the split plane.

The split plane may in some circumstances cause air leakage and alter the conditions of the reactions taking place in the combustion chamber near the split plane itself. The inactive combustion units arranged in groups around the split plane in practice shield the effects of air leakage. In fact, also the overall air flow from the inactive combustion units is concentrated around the split plane and air leakage only represents a negligible contribution that does not alter the reaction conditions.

According to an aspect of the invention, the combustor assembly comprises a plurality of can-type combustion units, circumferentially distributed about a longitudinal axis of the gas turbine engine and wherein the control system is further configured to entirely switch off the inactive combustion units.

According to an aspect of the invention, the combustor assembly comprises a plurality of can-type combustion units, each combustion unit having one or a plurality of respective burners and wherein the control system is further configured to switch off one or more burners for each combustion unit.

According to an aspect of the invention, the combustor assembly comprises two silo-type combustion units and wherein the control system is further configured to switch off one of the silo combustion units.

The invention may be flexibly and advantageously exploited in several types of gas turbine engines and is not limited to a particular structure.

According to an aspect of the invention, the admissible rich range includes values of the fuel-air equivalence ratio between 1 and 1.5, preferably between 1 and 1.4.

According to the invention, there is also provided a method for controlling a gas turbine power plant comprising:
a gas turbine engine, including a combustor assembly with a plurality of combustion units;
a fuel supply line and fuel actuators configured to supply a fuel containing ammonia to the combustion units of the combustor assembly; and
a control system;
the method comprising selectively switching off a number of combustion units at partial load conditions and controlling the fuel actuators so that the remaining active combustion units process an air/fuel mixture having a fuel-air equivalence ratio within an admissible rich range.

### BRIEF DESCRIPTION OF THE DRAWINGS

The present invention will now be described with reference to the accompanying drawings, which illustrate some non-limitative embodiments thereof, in which:
- figure 1 is a simplified block diagram of a gas turbine power plant in accordance with an embodiment of the present invention;
- figure 2 is a simplified block diagram of a gas turbine power plant in accordance with another embodiment of the present invention;
- figure 3 is a schematic cross-sectional view of a component of the plant of figure 1 using an annular combustor in a full-load operating condition;
- figure 4 is a schematic cross-sectional view of the component of figure 3 in a partial-load operating condition;
- figure 5 is a schematic cross-sectional view of a component of a gas turbine power plant in accordance with another embodiment of the present invention in a partial-load operating condition;
- figure 6 is a schematic cross-sectional view of a component of a gas turbine power plant using can combustors with at least one burner within each can in accordance with another embodiment of the present invention in a full-load operating condition;
- figure 7 is a schematic cross-sectional view of the component of figure 6 in a partial-load operating condition;
- figure 8 is a schematic cross-sectional view of the component of figure 6 in partial-load operation condition in accordance with another embodiment of the present invention;
- figure 9 is a schematic cross-sectional view of a component of a gas turbine power using can combustors including a plurality of burners within each can combustor plant in accordance with another embodiment of the present invention in a full-load operating condition;
- figure 10 is a schematic view of a part of the component of figure 9 in the full-load operating condition;
- figures 11-14 are schematic views of the part of figure 10 in respective different partial-load operating conditions;
- figure 15 is a schematic cross-sectional view of a component of a gas turbine power plant using silo combustors in accordance with another embodiment of the present invention in a partial-load operating condition;
- figures 16-20 are schematic views of a component of a gas turbine power plant using one or more silo combustors each with multiple burners in accordance with another embodiment of the present invention, in respective different operating conditions; and
- figure 21 is a graph showing quantities related to the gas turbine power plant of the present invention, namely the number of burners in operation vs. load (bottom) and the fuel-air equivalence ratio of the burners in operation vs. load (top).

### DETAILED DESCRIPTION OF EXEMPLARY EMBODIMENTS

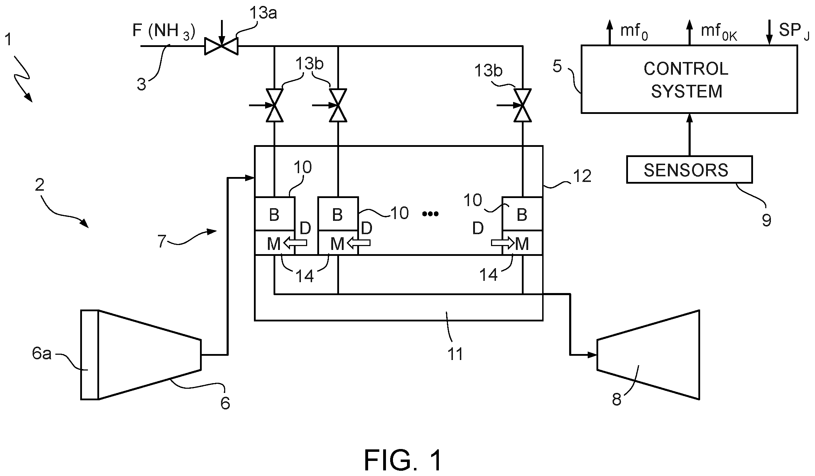

With reference to Figure 1, number 1 defines a gas turbine power plant comprising a gas turbine engine 2, a fuel supply line 3 and a control system 5.

The gas turbine engine 2, in turn, comprises a compressor 6, a combustor assembly 7 and an expansion section or turbine 8. Moreover, sensors 9 are arranged and configured to sense operating quantities of the gas turbine engine 2 and to send measurement signals to the control system 5.

The compressor 6 feeds the combustor assembly 7 with a flow of air drawn from outside.

The combustor assembly 7 comprises a plurality of burners 10 and at least one combustion chamber 11. The burners 10 are coupled to the fuel supply line 3 to receive a fuel F and cause the combustion of mixtures of air and fuel in the at least one combustion chamber 11. The fuel contains ammonia and in one embodiment may be pure ammonia. In other embodiments, the fuel may contain blends of ammonia with, for example, hydrogen and/or natural gas. An air plenum 12, coupled to the burners 10, is supplied with compressed air by the compressor 6 and defines a compressed air source for the burners 10.

The turbine 8 receives and expands a flow of hot gas from the combustor assembly 7 to extract mechanical work, which is transferred to an external user, typically an electric generator, which is not shown here.

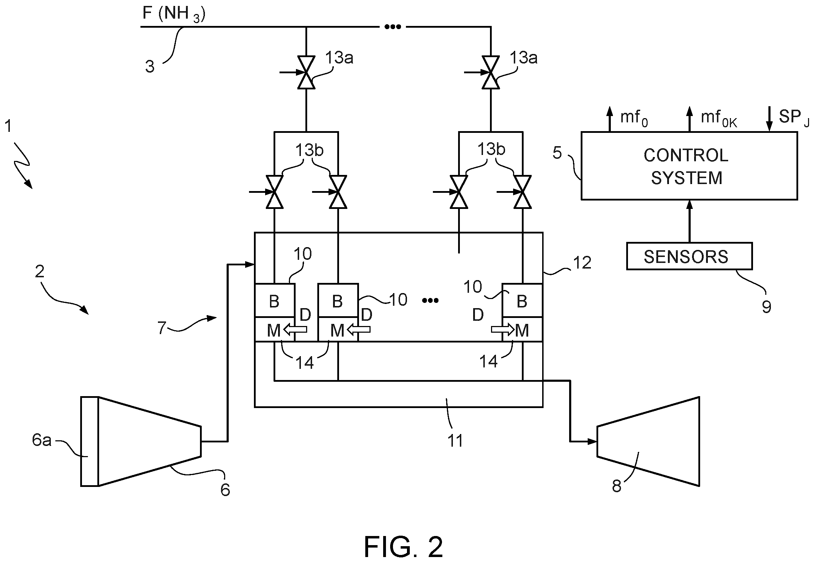

The control system 5 is configured to determine or receive from outside load set-points SP_{J} for the gas turbine engine 2 for desired operating conditions and to use actuators of the gas turbine engine 2, so that the load set-points SP_{J} may be achieved. In particular, the actuators include an inlet guide vane or IGV stage 6a of the compressor 6 and one or more fuel valves 13a. In particular, the one or more fuel valves 13a can be adjusted to control the flow of fuel F supply to the burners 10. In the embodiment of figure 1, a single fuel valve 13a is provided for all the burners 10, thus allowing overall control of the burners 10. It is however understood that the burners 10 may be otherwise grouped, with one fuel valve 13a for each group to simultaneously control all the burners 10 of the respective group. In the non limiting embodiment of figure 2, for example, the burners 10 are arranged in groups of two, with one fuel valve 13a for each group. In one embodiment here not shown, a respective fuel valve 13a for each burner 10 may be provided.

Additionally, the actuators include a respective shut-off valve 13b for each burner 10. Shut-off valves 13b are controllable to be set either in a fully open position or in a closed position to alternatively allow or forbid operation of the respective burners.

Mixers 14 are provided to allow injection of dilution air D downstream of the burners 10 and achieve overall lean combustion after rich decomposition (pyrolysis) of ammonia. Mixers 14 are only schematically represented downstream of respective burners 10. It is understood that the exact structure and positioning may be selected in accordance with design preference.

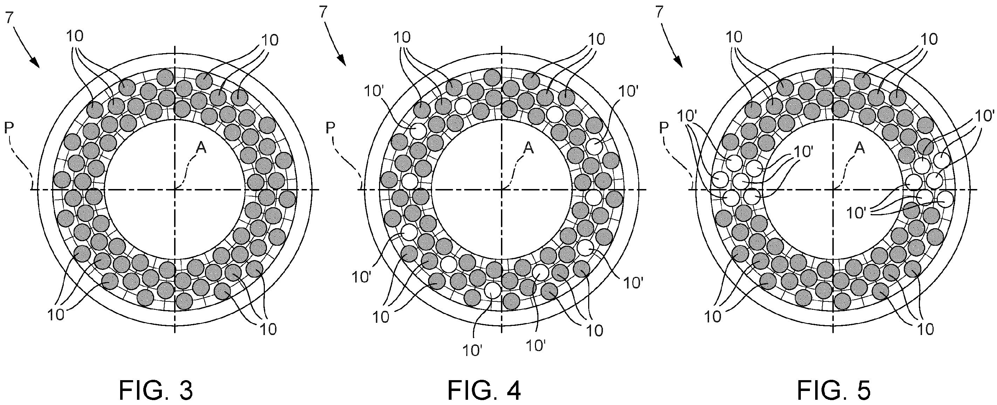

In the embodiment of figures 3 and 4, the combustion chamber 11 is an annular combustion chamber common to all the burners 10.

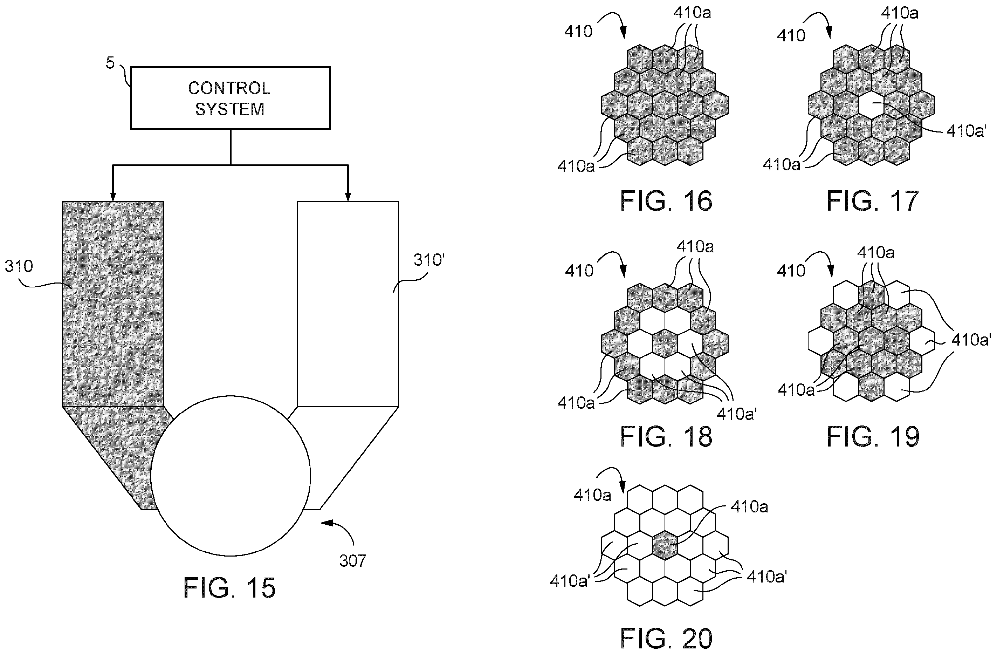

At full load conditions or at least at conditions of load set-points SP_{J} exceeding a threshold, the control system 5 activates all the burners 10 (figure 3) and fuel supply is controlled such that a fuel-air equivalence ratio ϕ of the mixture processed in the combustion chamber 11 is in an admissible rich range R (see also figure 16).

The fuel-air equivalence ratio for a mixture is defined as $ϕ = \frac{{m}_{F} / {m}_{A}}{{\left({m}_{F}/{m}_{A}\right)}_{ST}}$ where m_{F} is a fuel flow rate, m_{A} is an air flow rate and (m_{F}/m_{A})_{ST} is the ratio of fuel flow rate to air flow rate under stoichiometric conditions. For example, the admissible rich range R may include values of the fuel-air equivalence ratio ϕ greater than 1 and between 1 and 1.5 or preferably between 1 and 1.4.

Due to the high fuel-air equivalence ratio ϕ, ammonia is decomposed in an oxygen poor ambient and formation of pollutants, especially NOx, is prevented or at least kept at acceptable levels, so as to comply with emission regulations. The burners 10 are in practice operated as pyrolizers once the oxygen has been used up in an initial rich flame, because ammonia and NOₓ are thermally decomposed substantially in the absence of oxidizing agents.

At partial load conditions (figure 4), the control system 5 defines a load set-point SP_{J} and determines a target fuel flow rate m_{F0} that allows to meet the load set-point SP_{J} and switches off a number of burners, here designated as inactive burners 10'. The number of the inactive burners 10' being switched off is selected by the control system 5 such that the target fuel flow rate m_{F0} distributed to the remaining active burners 10 causes all the active burners 10 to run on a fuel-air equivalence ratio ϕ in the admissible rich range R. Fuel supply to the inactive burners 10' is cut off and in a non limiting embodiment all the active burners 10 receive equal fractions of the target fuel flow rate m_{F0}, i.e. an individual target fuel flow rate m_{F0K} for each active burner 10 is defined as ${m}_{F 0 K} = {m}_{F 0} / {M}_{A}$ where M_{T} is the number active burners 10. In other embodiments, individual target fuel flow rates m_{F0K} may be different for different burners 10, for example to create asymmetric distribution and avoid possible thermoacoustic pulsations.

Thus, M_{I} = M_{T} - M_{A}, M_{T} being the overall number of burners in the combustor assembly 7, is the number of inactive burners 10' which are switched off to maintain the fuel-air equivalence ratio ϕ in the admissible rich range R for the active burners 10. The inactive burners 10' where no reaction takes place feed air only into the combustion chamber 11, thus forcing the active burners 10 to be operated with the desired fuel-air equivalence ratio ϕ, so that specific reactions are allowed. In a specific embodiment ammonia is partly combusted and converted into a mixture of H₂O, H₂ and N₂. Addition of dilution air D through the mixers 14 downstream of the burners 10 allows to burn also the remaining molecular hydrogen, without significant increase in NOₓ production.

The switching-off pattern for the burners 10 may be selected in accordance with design preferences. For example, in the embodiment of figure 4, the inactive burners 10' are uniformly distributed over the combustion chamber 11 to achieve an overall even inlet profile towards the turbine.

In the embodiment of figure 5, instead, the inactive burners 10' are located close to each other, e.g. in groups of adjacent inactive burners 10', to reduce the effect of interfaces between active and inactive burners. This arrangement is expected to further cut the NOₓ emissions, since locally lean regions are reduced. Moreover, in annular combustors, the split plane P between upper and lower casing 15a, 15b of the gas turbine engine 2 may cause air leakage, that uncontrollably adds to desired air feed. In order to reduce adverse effects of air leakage, the inactive burners 10' may be gathered around the split plane, so that rich conditions for the active burners 10 may be better preserved away from the leakage regions.

The invention is applicable also to gas turbine engines having different combustion systems, including both single stage and sequential combustion systems. For a sequential combustion system the burner 10 resp. 10' in Figures 1 and 2 would be replaced by a sequential combustion system operated in an overall rich mode and followed by an air mixer 14.

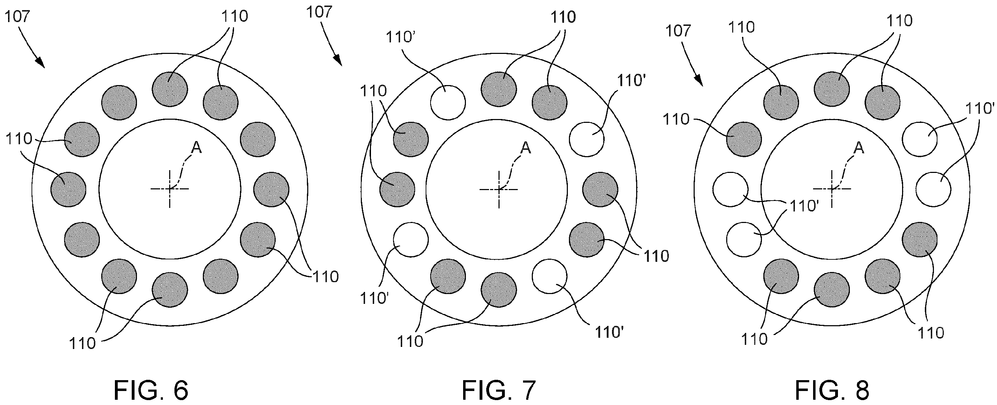

According to an embodiment schematically illustrated in Figures 6 and 7, a gas turbine engine is equipped with a combustor assembly 107 of the can type. The combustor assembly 107 comprises a plurality of can combustors 110 (here by way of example and not limited to twelve), circumferentially distributed about a longitudinal axis A of the gas turbine engine. At full or high load conditions, i.e. until the fuel-air equivalence ratio ϕ can be maintained within the admissible rich range R, the control system 5 (here not shown) activates all the can combustors 110 (figure 6). When the load set-points SP_{J} decreases and the admissible rich range R cannot be safely maintained, the control system 5 switches off as many can combustors (inactive can combustors 110') as appropriate to achieve the desired fuel-air equivalence ratio ϕ for the remaining active can combustors 110. The inactive can combustors 110' are entirely switched off. Again, the switch-off pattern may be selected in accordance with design preferences. The switch-off pattern may be also varied over time in order to ensure that the combustor hardware lifetime is consumed equally for all sectors of the combustor assembly 107. In the embodiment of figure 7, for example, active can combustors 110 and inactive can combustors 110' are alternated in the circumferential direction. In the embodiment of figure 8, instead, the inactive can combustors 110' are grouped.

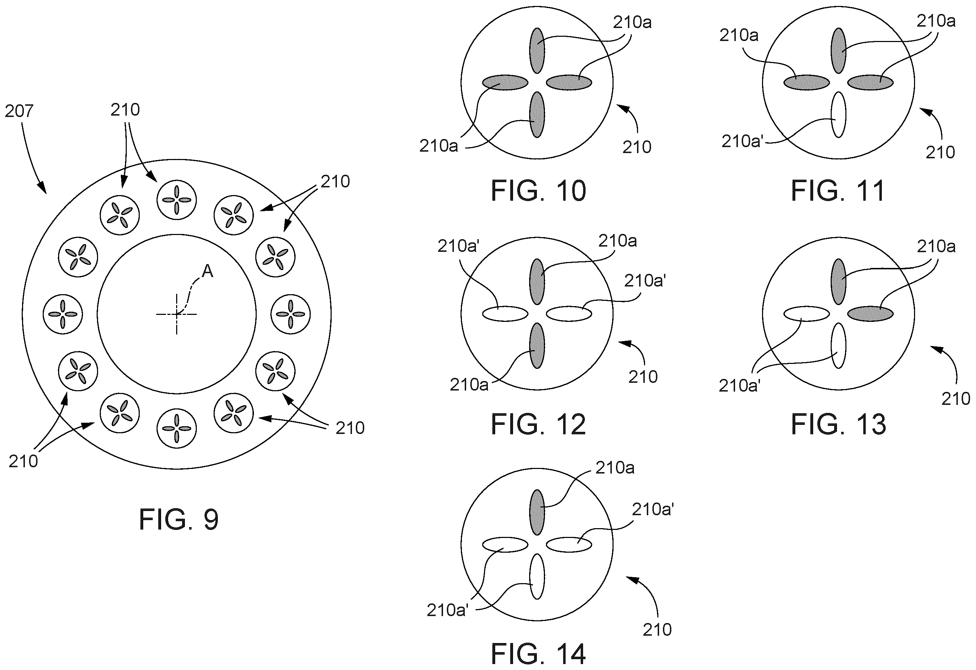

In the embodiment of figures 9-14, in a gas turbine engine with a combustor assembly 207 of the can type, each can combustor 210 comprises a plurality of respective burners 210a. Depending on the load conditions, the control system 5 either activates all the burners 210a of the can combustors 210, or switches off one or more inactive burners 210a' in each can combustor 210. Figures 10-14 show one of the can combustors at different load conditions, namely full load, with all the burners 210a active (figure 10); at high partial load, with one inactive burner 210a' (figure 11); at intermediate load conditions, with two inactive burners 210a' in different switch-off patterns that may be selected in accordance with design preferences (figures 12 and 13, respectively); and at low partial load, with all inactive burners 210a' except one (figure 14).

Figure 15 shows a gas turbine engine 300 in accordance with another embodiment of the invention. The gas turbine engine 300 comprises a silo combustor system 307 with two silo combustors 310. At partial load conditions, the control system 5 switches off one of the silo combustors 310. No reactions take place in the inactive silo combustor 310', while the active silo combustor 310 may be operated with a fuel-air equivalence ratio ϕ within the admissible rich range R.

In another embodiment, each silo combustor, designated by 410 in figures 16-20, comprises a plurality of burners 410a that may be activated and deactivated individually or in groups, but not necessarily all together. A single silo combustor may be present. The control system 5 may activate all the burners 410a at full load conditions (figure 16) or switch off one or more inactive burners 410a' in each can combustor 410 at partial load (figures 17-20). At high partial load, the control system 5 initially sets one inactive burner 410a' (figure 17); at intermediate load conditions, an increasing number of inactive burners 410a' are switched off, possibly in different switch-off patterns that may be selected in accordance with design preferences (figures 18 and 19, respectively); and at low partial load, the control system maintains a minimum number of active burners 410a (e.g. one), whereas all the other burners 410a' are inactive (figure 20).

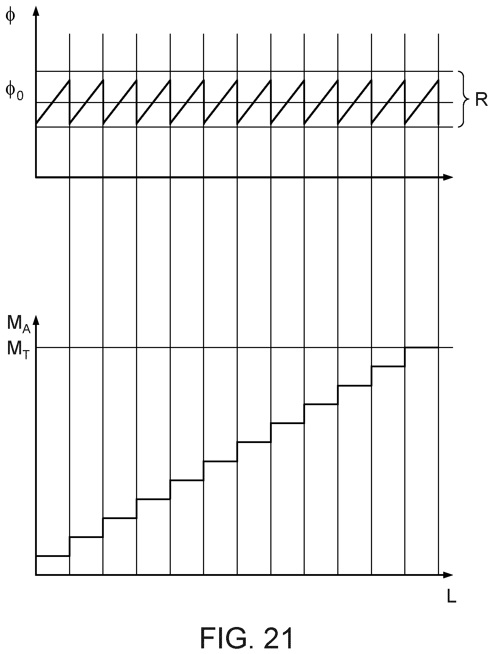

Figure 21 shows, e.g. for the combustor assembly 7 of figures 3 and 4, that all the M_{T} burners 10 are activated at full load and the fuel-air equivalence ratio ϕ decreases as load decreases. Before the fuel-air equivalence ratio ϕ reaches the lower limit of the admissible rich range R, one of the burners (or a group of burners, if the burners are controlled in groups) is switched off and the remaining active burners are forced to work on a higher fuel-air equivalence ratio ϕ, well within the admissible rich range R. The number M_{A} of active burners is then reduced stepwise as the load decreases. In the example of figure 16, the switch-off strategy may be selected so that the actual fuel-air equivalence ratio ϕ oscillates around the target fuel-air equivalence ratio ϕ₀. It is however understood that other switch-off strategies may be adopted, such as switch-off may be carried out with a view to maintaining the fuel-air equivalence ratio ϕ always greater than or equal to the target fuel-air equivalence ratio ϕ₀.

It is finally apparent that changes and variations may be made to the gas turbine power plant and to the method described and illustrated without departing from the scope of protection as defined in the accompanying claims.

For example, the switch-off strategy and the switch-off pattern may be flexibly selected in accordance with design preferences, e.g. to optimize combustion based on specific conditions of the gas turbine engines.

## Claims

1. A gas turbine power plant comprising:
a gas turbine engine (2), including a combustor assembly (7; 107; 207; 307; 410) with a plurality of combustion units (10; 110; 210a; 310; 410a);
a fuel supply line (3) and fuel actuators (13a, 13b) configured to supply a fuel (F) containing ammonia to the combustion units (10; 110; 210a; 310; 410a) of the combustor assembly (7; 107; 207; 307);
a control system (5) configured to selectively switch off a number (M_{I}) of combustion units (10'; 110'; 210a'; 310'; 410a') at partial load conditions and to control the fuel actuators (13a, 13b) so that the remaining active combustion units (10; 110; 210a; 310; 410a) process an air/fuel mixture having a fuel-air equivalence ratio (ϕ) within an admissible rich range (R).

2. The gas turbine power plant according to claim 1, wherein the control system (5) is further configured to:
define or receive a load set-point (SP_{J});
define a target fuel flow rate (m_{F0}) such that the load set-point (SP_{J}) is met with the target fuel flow rate (m_{F0}); and
select the number (M_{I}) of inactive combustion units (10'; 110'; 210a'; 310'; 410a') so that the target fuel flow rate (m_{F0}) distributed to the remaining active combustion units (10; 110; 210a; 310; 410a) causes the fuel-air equivalence ratio (ϕ) of the air/fuel mixtures processed by all the active combustion units (10; 110; 210a; 310; 410a) to lie within the admissible rich range (R).

3. The gas turbine power plant according to claim 1 or 2, wherein the control system (5) is further configured to control the fuel actuators (13a, 13b) so that all the active combustion units (10; 110; 210a; 310; 410a) receive equal fuel flow rates (m_{F0K}).

4. The gas turbine power plant according to any one of the preceding claims, wherein the control system (5) is further configured to cut off fuel supply to the inactive combustion units (10'; 110'; 210a'; 310'; 410a') and the inactive combustion units (10'; 110'; 210a'; 310'; 410a') are fed with air only and no reaction takes place thereat.

5. The gas turbine power plant according to any one of the preceding claims, wherein the inactive combustion units (10'; 110'; 210a'; 410a') are either uniformly distributed over the combustor assembly (7; 107; 207; 410) or located close to each other in groups of adjacent combustion units (10'; 110'; 210a'; 410a).

6. The gas turbine power plant according to claim 5, wherein the gas turbine engine (2) comprises an upper casing (15a) and a lower casing (15b) joined at a split plane (P), wherein the combustor assembly (7) comprises an annular combustion chamber (11) common to all the combustion units (10) and wherein the inactive combustion units (10') are preferably arranged in groups around the split plane (P).

7. The gas turbine power plant according to any one of claims 1 to 5, wherein the combustor assembly (107) comprises a plurality of can-type combustion units (110), circumferentially distributed about a longitudinal axis (A) of the gas turbine engine (2) and wherein the control system (5) is further configured to entirely switch off the inactive combustion units (110).

8. The gas turbine power plant according to any one of the preceding claims, wherein the combustor assembly (207) comprises a plurality of can-type combustion units (210), each combustion unit (210) having a plurality of respective burners (210a) and wherein the control system (5) is further configured to switch off one or more burners (210a') for each combustion unit (210).

9. The gas turbine power plant according to any one of claims 1 to 4, wherein the combustor assembly (307) comprises two silo-type combustion units (310) and wherein the control system (5) is further configured to switch off one (310') of the silo combustion units.

10. The gas turbine power plant according to any one of claims 1 to 4, wherein the combustor assembly comprises at least one silo-type combustion unit (410), each comprising a plurality of burners (410a) and wherein the control system (5) is further configured to switch off on or more burners (410a') in one or more of the at least one of the combustion unit (410).

11. The gas turbine power plant according to any one of the preceding claims, comprising mixers (14) configured to add dilution air (D) downstream of respective combustion units (10).

12. A method for controlling a gas turbine power plant (1) comprising:
a gas turbine engine (2), including a combustor assembly (7; 107; 207; 307; 410) with a plurality of combustion units (10; 110; 210a; 310; 410a);
a fuel supply line (3) and fuel actuators (13a, 13b) configured to supply a fuel (F) containing ammonia to the combustion units (10; 110; 210a; 310; 410a) of the combustor assembly (7; 107; 207; 307; 410); and
a control system (5);
the method comprising selectively switching off a number (M_{I}) of combustion units (10'; 110'; 210a'; 310'; 410a') at partial load conditions and controlling the fuel actuators (13a, 13b) so that the remaining active combustion units (10; 110; 210a; 310; 410a) process an air/fuel mixture having a fuel-air equivalence ratio (ϕ) within an admissible rich range (R).

13. The method according to claim 12, wherein controlling the fuel actuators (13a, 13b) comprises:
defining or receiving a load set-point (SP_{J});
defining a target fuel flow rate (m_{F0}) such that the load set-points (SP_{J}) is met with the target fuel flow rate (m_{F0}); and
selecting the number (M_{I}) of inactive combustion units (10'; 110'; 210a'; 310'; 410a) so that the target fuel flow rate (m_{F0}) distributed to the remaining active combustion units (10; 110; 210a; 310; 410a) causes the fuel-air equivalence ratio (ϕ) of the air/fuel mixtures processed by all the active combustion units (10; 110; 210a; 310; 410a) to lie within the admissible rich range (R).

14. The method according to claim 12 or 13, wherein controlling the fuel actuators (13a, 13b) comprises supplying equal fuel flow rates (m_{F0K}) to all the active combustion units (10; 110; 210a; 310; 410a).

15. The method according to any one of claims 12 to 14, wherein controlling the fuel actuators (13a, 13b) comprises cutting off fuel supply to the inactive combustion units (10'; 110'; 210a'; 310'; 410a'), whereby the inactive combustion units (10'; 110'; 210a'; 310'; 410a') are fed with air only and no reaction takes place thereat.
